# EUROPEAN PATENT APPLICATION

(11) **EP 4 715 523 A1**
(43) Date of publication of application: **25.03.2026**
(21) Application number: 25201609.2
(22) Date of filing: 11.09.2025
(51) Int. Cl.: G06F 1/26, G06F 1/28, G06F 1/30

(54) **MITIGATING POWER FLUCTUATIONS USING BATTERY ENERGY STORAGE SYSTEMS**

(30) Priority: 19.09.2024 US 202418890277
(71) Applicant: Google LLC, Mountain View, CA 94043 (US)
(72) Inventor: Gubba Ravikumar, Krishnanjan, Mountain View, California, 94043 (US); Upreti, Ashish, Mountain View, California, 94043 (US)
(74) Representative: Betten & Resch

(57) **Abstract**

Generally disclosed herein is a mechanism to mitigate power fluctuations of a data center by dynamically charging and discharging a battery energy storage system (BESS). According to some examples, a BESS control system can be configured to monitor power demand fluctuations and initiate charging of the BESS during periods of low power demand. One example of a period of low power demand includes active idle, wherein the workloads of the server machines frequently decrease by a small magnitude. Another example of a period of low power demand includes deep idle, wherein the workloads of the server machines decrease by a larger magnitude than the active idle for a longer duration. The system may discharge the power from the BESS during the peak power demand. The BESS control system may stabilize the data center power system through fast-acting voltage and frequency control at a system level.

## Description

Large-scale, synchronous machine learning (ML) workloads may almost instantaneously generate power fluctuation in the range of tens of megawatts on various electronic components. Often, such workload changes may require repetitive power fluctuations in cycles where the power fluctuates frequently at short intervals and repeats the cycles for an extended time. Such power fluctuation may impact power system and/or power system quality and can cause a detrimental effect leading to power quality deterioration and potentially black out the entire data center.

### SUMMARY

Generally disclosed herein is a mechanism to mitigate power fluctuations of a data center by dynamically charging and discharging a centralized battery energy storage system (BESS). The BESS can enhance the resilience of the data center during a potential utility disturbance by providing backup power and supporting critical load when the power demand is at its peak.

An aspect of the disclosure provides a system for mitigating power fluctuations of a data center, the system comprising: a battery energy storage system (BESS); and one or more processors in communication with the BESS, the one or more processors configured to: measure power demand of the data center; determine whether the power demand decreases below a lower power demand threshold; in response to the power demand decreasing below the lower power demand threshold, initiate charging the battery energy storage system; and disengage the charging of the BESS when a state of charge (SOC) of the BESS reaches a SOC threshold.

In some examples, the SOC threshold is in a range of 10% to 90%.

In some examples, the one or more processors are configured to discharge power from the BESS in response to the power demand exceeding an upper power demand threshold.

In some examples, the discharged power from the BESS is used to supply power to the data center.

In some examples, the discharged power is used as backup power when the data center ceases to receive power supply.

In some examples, the discharging of the BESS is initiated when the SOC of BESS is less than the SOC threshold.

In some examples, the BESS is an energy storage device connected to server racks included in the data center.

In some examples, the charging of the BESS is initiated during at least one of a deep idle period or an active idle period, and wherein the BESS is configured to continually charge during both the deep idle period and active idle period.

In some examples, the deep idle period and the active idle period are due to transient workload fluctuations.

Another aspect of the disclosure provides a method for mitigating power fluctuations of a data center, the method comprising: measuring power demand of the data center; determining whether the power demand decreases below a lower power demand threshold; in response to the power demand decreasing below the lower power demand threshold, initiate charging a battery energy storage system (BESS); and disengage the charging of the BESS when a state of charge (SOC) of the BESS reaches a SOC threshold.

In some examples, the SOC threshold is in a range of 10% to 90%.

In some examples, the method further comprises discharging power from the BESS in response to the power demand exceeding an upper power demand threshold.

In some examples, the discharged power from the BESS is used to supply power to the data center.

In some examples, the discharged power is used as backup power when the data center ceases to receive power supply.

In some examples, the discharging of the BESS is initiated when the SOC of BESS is less than the SOC threshold.

In some examples, the BESS is an energy storage device connected to server racks included in the data center.

In some examples, the charging of the BESS is initiated during at least one of a deep idle period or an active idle period, and wherein the BESS is configured to continually charge during both the deep idle period and active idle period.

In some examples, the deep idle period and the active idle period are due to transient workload fluctuations.

Yet another aspect of the disclosure provides a non-transitory machine-readable medium comprising machine-readable instructions encoded thereon for performing a method of mitigating power fluctuations of a data center, the method comprising: measuring power demand of the data center; determining whether the power demand decreases below a lower power demand threshold; in response to the power demand decreasing below the lower power demand threshold, initiate charging a battery energy storage system (BESS); and disengage the charging of the BESS when a state of charge (SOC) of the BESS reaches a SOC threshold.

In some examples, the method further comprises discharging power from the BESS in response to the power demand exceeding an upper power demand threshold.

### BRIEF DESCRIPTION OF THE DRAWINGS

FIG. 1 is a schematic representation of a BESS control system for a data center in accordance with aspects of the disclosure.
FIG. 2 is an example BESS control system in accordance with aspects of the disclosure.
FIG. 3 provides vertically aligned graphs representing workloads and BESS charging rates in accordance with aspects of the disclosure.
FIG. 4 provides vertically aligned graphs representing charge/discharge cycles of a BESS and in-rack batteries in accordance with aspects of the disclosure.
FIG. 5 is an example flow diagram of the BESS control system in accordance with aspects of the disclosure.

### DETAILED DESCRIPTION

The present disclosure relates to mitigating power fluctuations of a data center by dynamically charging and discharging a battery energy storage system (BESS). According to some examples, a BESS control system (the "system") can be configured to monitor power demand fluctuations and initiate charging of the BESS during periods of low power demand. One example of a period of low power demand includes active idle, wherein the workloads of the server machines frequently decrease by a small magnitude. Another example of a period of low power demand includes deep idle, wherein the workloads of the server machines decrease by a larger magnitude than the active idle for a longer duration. The system may discharge the power from the BESS during the peak power demand. The BESS control system may stabilize the data center power system through fast-acting voltage and frequency control at a system level.

The system may continuously charge the BESS when the power demand decreases and discharge when the power demand is at its peak, thereby effectively managing power fluctuations and maintaining grid stability. The system may reduce the number of charging or discharge cycles of the BESS by avoiding the discharging of the BESS until the state of charge (SOC) of the BESS reaches a predetermined threshold SOC. The threshold may be a percentage of SOC, such as 80%, 90%, 95%, etc. In other examples, the threshold may be a value, such as a measurement in units, etc.

Once the BESS reaches the predetermined threshold SOC, the power discharged from the BESS can be used to smooth the peak load to prevent extreme spikes. In some examples, the discharge of the BESS can start when the power supply ceases to supply power (e.g., power outage of the data center) even if the SOC of the BESS is less than the threshold.

By implementing the BESS described herein, server racks can be more densely populated with hardware devices by eliminating space in the rack for in-rack batteries and instead using the BESS that is separately installed outside the server racks. The power stored in the BESS may also provide power as backup power for an extended period of time from minutes to hours when no power is transmitted from the load. Further, by actively managing the charge and discharge cycles of the BESS as described herein, the system may enable the BESS's life span to last relatively longer than that of other types of power backup systems.

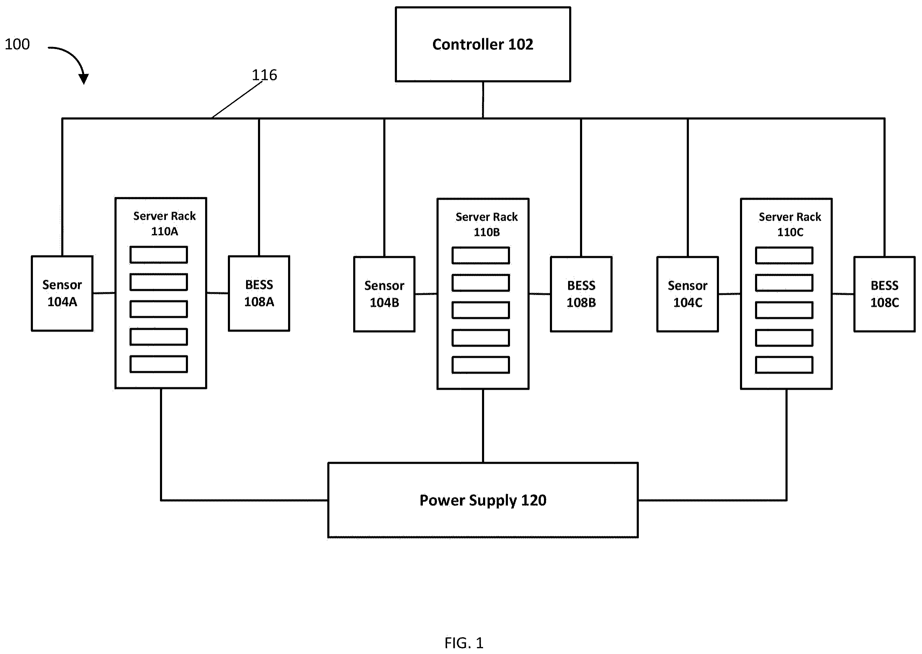

FIG. 1 is a schematic representation of a BESS control system 100 for a data center. The BESS control system 100 includes controller 102, power supply 120, and server racks 110A-C. Each server rack is connected to sensor 104A-C and BESS 108A-C, respectively. Each sensor may be configured to measure the changes in the amount of workload for each server rack. Each sensor may also be configured to monitor the amount of power being consumed by each server rack and monitor the power received from power supply 120. Each sensor may transmit the measured data to controller 102 at a preconfigured interval.

BESS 108A-C can be configured to store power supplied to each server rack. BESS may refer to any type of energy storage system that can accumulate, store, and discharge electricity flexibly. BESS 108A-C may include, but is not limited to, lithium-based systems, flow batteries, lead-acid batteries, etc._{÷}The BESS can replace in-rack batteries. The BESS may be a large-scale battery energy storage system (BESS) installed at a medium-voltage level in the data center in a large, aggregated capacity. For example, the BESS may contain Lithium-ion batteries, DC/AC inverters, and a BESS master control system along with a human-machine interface (HMI). In some examples, the BESS may be installed at a low-voltage level in the data center in a distributed capacity. In such an application, the BESS can be installed close to the server racks. Server racks 1 10A-C include one or more computing devices used for various purposes, such as internet hosting, cloud computing, storage, computing, networking, machine learning, etc. The computing devices may include processors that include one or more individual circuits, transistors, and/or other components. Each operation performed at a circuit may require at least a small amount of power, and thus, each operation generates a certain amount of heat as a byproduct. Although each circuit may generate relatively little heat, each server rack may produce a fairly large amount of heat in the aggregate.

Each sensor may send the power consumption measurement in watts and/or vars to controller 102 via bus 116. Bus 116 may include a physical layer implementing a communication protocol between power consumption sensors attached to each server rack or each computing device and controller 102. BESS 108A-C can be configured to communicate with controller 102 via bus 116.

Controller 102 may be configured to control the charging and discharging of BESS 108A-C. For example, BESS 108A-C can be configured to continuously charge and store power when the power demand is below a predefined threshold or power demand starts to decrease as the workloads of the respective server rack decrease. BESS 108A-C can be configured to discharge the stored power when the power demand is at its peak such that the power supplied from BESS 108A-C can help manage power fluctuations and maintain the stability of the power supply 120. The power discharged from BESS 108A-C can also help smooth the peak load to prevent extreme spikes in the power demand.

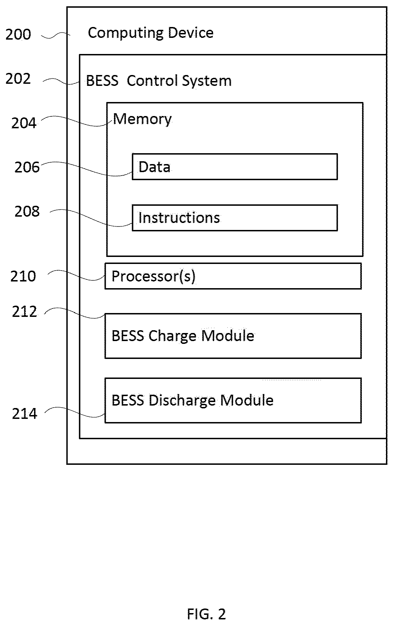

FIG. 2 is a block diagram illustrating an example computing device 200 according to aspects of this disclosure. The computing device can take on a variety of configurations, such as, for example, a controller or microcontroller, or a processor, such as a CPU, a GPU, or an ASIC, including a tensor processing unit (TPU). The computing device may further include BESS control system 202. The BESS control system 202 may be configured to control the charging and discharging of the BESS to mitigate the power demand fluctuations of the server racks.

BESS control system 202 may include a processor 210, memory 204 including data 206 and instructions 208, BESS charge module 212, and BESS discharge module 214, as well as other components typically present in server computing devices. In other examples, such operations may be performed by one or more of the computing devices in a data center or elsewhere.

The memory 204 can store information accessible by the processor 210, including instructions 208 that can be executed by the processor 210. Memory can also include data 206 that can be retrieved, manipulated, or stored by the processor 210. Memory 204 may be a type of non-transitory computer-readable medium capable of storing information accessible by the processor 210, such as a hard drive, solid-state drive, tape drive, optical storage, memory card, ROM, RAM, DVD, CD-ROM, write-capable, and read-only memories. The processor 210 can be a well-known processor or other lesser-known types of processors. Alternatively, the processor 210 can be a dedicated controller such as an ASIC.

The instructions 208 can be a set of instructions executed directly, such as machine code, or indirectly, such as scripts, by the processor 210. In this regard, the terms "instructions"," "steps," and "programs" can be used interchangeably herein. The instructions 208 can be stored in object code format for direct processing by the processor 210, or other types of computer language including scripts or collections of independent source code modules that are interpreted on demand or compiled in advance. For example, instructions 208 may include instructions for BESS 108A-C depicted in FIG.1 to charge or discharge power based upon input from BESS charge module 212 and BESS discharge module 214.

The data 206 can be retrieved, stored, or modified by the processor 210 in accordance with the instructions 208. For instance, although the system and method are not limited by a particular data structure, the data 206 can be stored in computer registers, in a relational database as a table having a plurality of different fields and records, or in XML documents. The data 206 can also be formatted in a computer-readable format such as, but not limited to, binary values, ASCII, or Unicode. Moreover, data 206 can include information sufficient to identify relevant information, such as numbers, descriptive text, proprietary codes, pointers, references to data stored in other memories including other network locations, or information that is used by a function to calculate relevant data. Data 206 can include historical data pertaining to the correlation between workloads and power demand. Additionally, or alternatively, data 206 may include test data obtained based on experiments performed using BESS 108A-C.

BESS charge module 212 may command BESS 108A-C to charge during an active idle state or deep idle state. In both states, the power demand decreases as the workloads of each server rack decrease. The active idle state may refer to frequent fluctuations of power demand and workloads. The magnitude of the fluctuations is smaller than that of the deep idle state. The deep idle state may refer to a state where the power demand and workloads fluctuate with a greater magnitude. When sensors 104A-C send the fluctuation information to controller 102, BESS charge module 212 may be configured to start charging BESS 108A-C.

BESS discharge module 214 may command BESS 108A-C to discharge the power charged when the server racks 110A-C are in either an active idle state or a deep idle state. BESS discharge module 214 may command BESS 108A-C to discharge power when sensors 104A-C determine that the power demand will be at its peak as the workloads of each server rack are suddenly increasing and exceeding a threshold level. The discharged power from BESS 108A-C may be used by server racks 110A-C along with power supplied from power supply 120 such that the amount of the power supplied from power supply 120 does not undergo extreme spikes.

FIG. 2 functionally illustrates processor 210 and memory 204 as being within the same block, but processor 210 and memory 203 may instead include multiple processors and memories that may or may not be stored within the same physical housing. For example, some of the instructions 208 and data 206 may be stored on a removable CD-ROM and others may be within a read-only computer chip. Some or all of the instructions and data can be stored in a location physically remote from, yet still accessible by, the processor 210. Similarly, the processor 210 can include a collection of processors, which may or may not operate in parallel.

It is to be appreciated that in this example, BESS charge module 212 and BESS discharge module 214 are shown as part of BESS control system 202. In other examples, BESS charge module 212 and BESS discharge module 214 may be implemented in one or more other systems or computing devices.

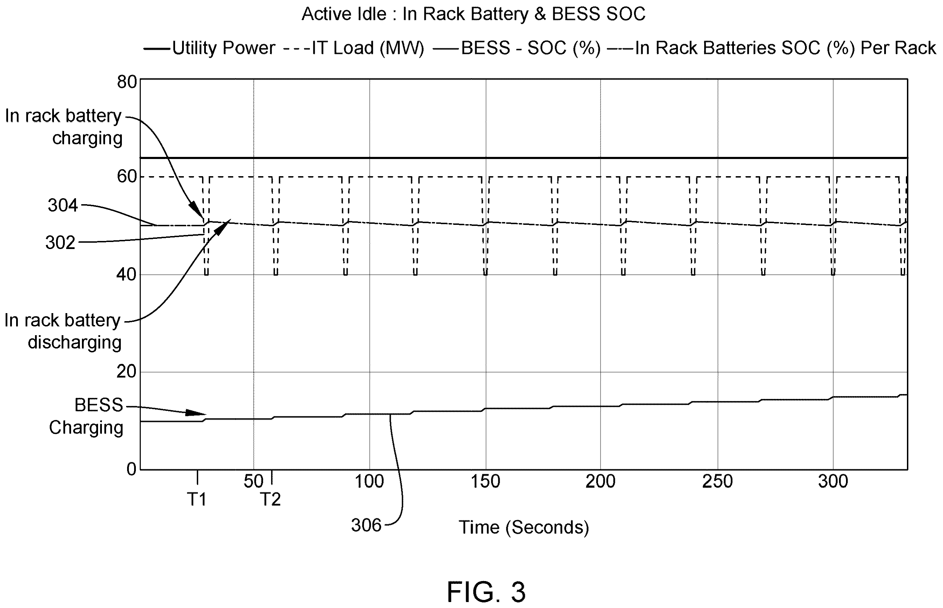

FIG. 3 illustrates vertically aligned graphs representing a correlation between workloads and BESS charging rates in an active idle state. Graph line 304 represents the SOC of in-rack batteries. Graph line 302 represents the workloads and graph line 306 represents the SOC of BESS. At T1, the workloads decrease, and the BESS starts charging. At T1 graph line 306 shows the SOC steps up at T1 and T2 when the workloads drop again. The BESS may be configured to continue to charge and accumulate power until it reaches a predefined SOC threshold (not shown). In-rack batteries with smaller capacities can only repeat charging and discharging since in-rack batteries normally need to maintain their SOC at approximately 50%. To maintain its SOC at approximately 50%, the in-rack batteries may charge when the workloads decrease below a lower threshold value (not shown) and discharge when the workloads increase over an upper threshold value (not shown).

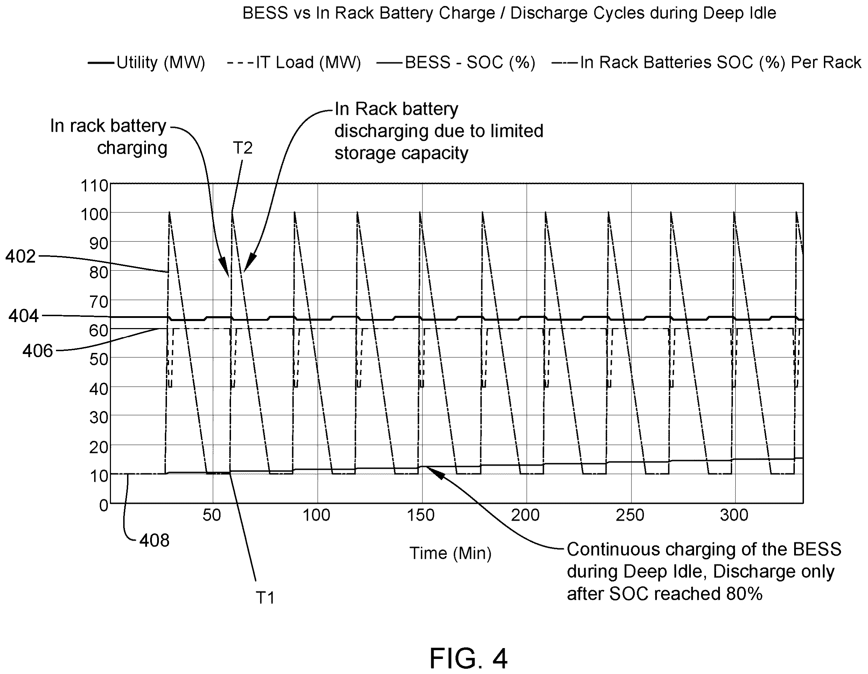

FIG. 4 illustrates vertically aligned graphs representing the charge/discharge cycles of a BESS and in-rack batteries in a deep idle state. Graph line 402 represents the SOC of in-rack batteries. Graph line 404 represents the power consumption level of server racks. Graph line 406 represents workload and graph line 408 represents the SOC of the BESS. When the workloads decrease, the in-rack batteries start to charge. However, as workloads decrease by a greater amount in the deep idle state than in an active idle state, the SOC of the in-rack batteries can easily reach 100% SOC, and the SOC drops below 50% SOC level when the workloads and power demand increase. On the contrary, even during the deep idle state, the SOC of the BESS can gradually increase without discharging the stored power until it reaches an upper threshold. The charged BESS can be configured to discharge the stored power when it reaches a lower threshold level or the regular power supply ceases to operate.

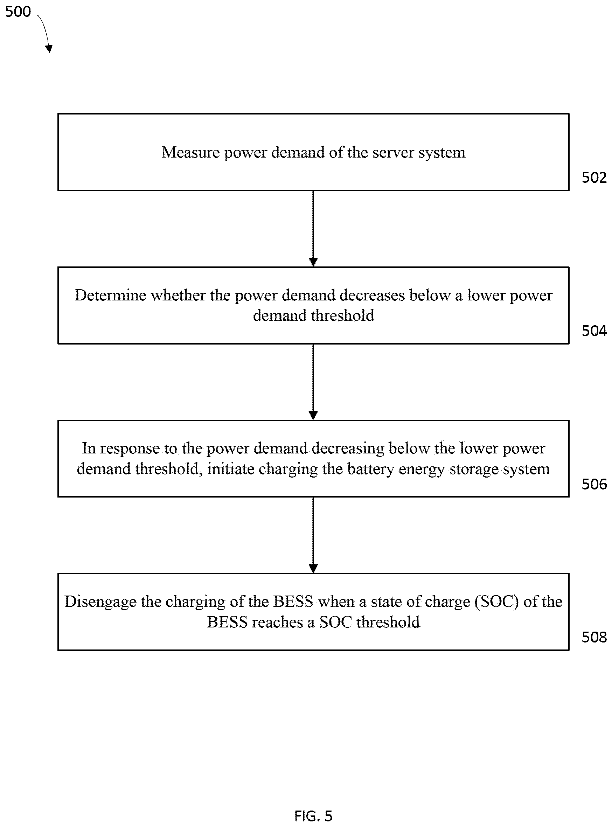

FIG. 5 illustrates an example flow diagram of the BESS control system. According to block 502, the system may be configured to measure the power demand of the data center. The power demand may change when the workloads of the server racks increase or decrease. When the workload decreases, such as in the active idle state or deep idle state, the power demand decreases.

According to block 504, the system may be configured to determine whether the power demand decreases below a lower power demand threshold. According to some examples, if the power demand decreases below the lower power demand threshold, the power supply may reduce the amount of power transmitted to each server rack. The BESS control system may maintain the steady amount of power supplied from the power supply by charging the BESS with unneeded power during the idle state.

According to block 506, the system may be configured to, in response to the power demand decreasing below the first power demand threshold, initiate charging the battery energy storage system. The BESS starts to charge, and the power supply does not need to reduce the amount of power transmitted to each server rack. The BESS may continue to charge until the SOC reaches a predetermined SOC threshold, such as a percentage. Example thresholds may be in a range of 10%-90%, though it should be understood that other configurations are possible.

According to block 508, the system may be configured to disengage the charging of the BESS when a state of charge (SOC) of the BESS reaches the SOC threshold. The system may also be configured to discharge the power stored in the BESS when it reaches the SOC threshold, or the system detects that the power is no longer supplied by the power supply such as in case of a power outage. In some examples, the system may be configured to discharge the power stored in the BESS when the power demand exceeds a threshold level. In such an example, the power discharged from the BESS can be used by the server racks such that the power supply does not need to suddenly increase the amount of the power to be supplied to the server racks.

The BESS control system described herein is beneficial at least in that it provides for efficiently charging and discharging the power using the BESS when a certain amount of power is no longer needed due to the sudden decrease in workloads and power demand. The stored power can be discharged to alleviate the burden of the power supply to supply a significantly increased amount of power in a short period when the workloads and power demand drastically increase within a short period. Thus, the BESS control system can promote the stability of the amount of the power supply and avoid hardware degradations of the power supply device. The BESS control system may also alleviate the hardware degradation of the server components since each server rack may receive a near-constant amount of power supply.

By implementing the BESS described herein, server racks can be more densely populated with hardware devices by eliminating space in the rack for in-rack batteries and instead using the BESS that is separately installed BESS outside the server racks. The power stored in the BESS may also provide power as backup power for an extended period of time from minutes to hours when no power is transmitted from the load. Further, by actively managing the charge and discharge cycles of the BESS as described herein, the system may enable the BESS's life span to last relatively longer than that of other types of power backup systems.

In this specification, the phrase "configured to" is used in different contexts related to computer systems, hardware, or part of a computer program, engine, or module. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program, engine, or module is said to be configured to perform one or more operations, this means that the computer program includes one or more program instructions, that when executed by one or more computers, causes the one or more computers to perform the one or more operations.

Although the technology herein has been described with reference to particular examples, it is to be understood that these examples are merely illustrative of the principles and applications of the present technology. It is therefore to be understood that numerous modifications may be made and that other arrangements may be devised without departing from the scope of the present technology as defined by the appended claims.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A system for mitigating power fluctuations of a data center, the system comprising:
a battery energy storage system, BESS; and
one or more processors in communication with the BESS, the one or more processors configured to:
measure power demand of the data center;
determine whether the power demand decreases below a lower power demand threshold;
in response to the power demand decreasing below the lower power demand threshold, initiate charging the battery energy storage system; and
disengage the charging of the BESS when a state of charge, SOC, of the BESS reaches a SOC threshold.

2. The system of claim 1, wherein the one or more processors are configured to discharge power from the BESS in response to the power demand exceeding an upper power demand threshold.

3. The system of claim 2, wherein the discharged power from the BESS is used to supply power to the data center.

4. The system of claim 3, wherein the discharged power is used as backup power when the data center ceases to receive power supply.

5. The system of claim 4, wherein the discharging of the BESS is initiated when the SOC of BESS is less than the SOC threshold; and/or
wherein the BESS is an energy storage device connected to server racks included in the data center.

6. The system of any one of claims 1 to 5, wherein the charging of the BESS is initiated during at least one of a deep idle period or an active idle period, and wherein the BESS is configured to continually charge during both the deep idle period and active idle period; and
wherein optionally the deep idle period and the active idle period are due to transient workload fluctuations.

7. A method for mitigating power fluctuations of a data center, the method comprising:
measuring power demand of the data center;
determining whether the power demand decreases below a lower power demand threshold;
in response to the power demand decreasing below the lower power demand threshold, initiating charging a battery energy storage system, BESS; and
disengaging the charging of the BESS when a state of charge, SOC, of the BESS reaches a SOC threshold.

8. The system of any one of claims 1 to 6 or the method of claim 7, wherein the SOC threshold is in a range of 10% to 90%.

9. The method of claim 7 or claim 8, further comprising:
discharging power from the BESS in response to the power demand exceeding an upper power demand threshold.

10. The method of claim 9, wherein the discharged power from the BESS is used to supply power to the data center.

11. The method of claim 10, wherein the discharged power is used as backup power when the data center ceases to receive power supply.

12. The method of claim 11, wherein the discharging of the BESS is initiated when the SOC of BESS is less than the SOC threshold; and/or
wherein the BESS is an energy storage device connected to server racks included in the data center.

13. The method of any one of claims 7 to 12, wherein the charging of the BESS is initiated during at least one of a deep idle period or an active idle period, and wherein the BESS is configured to continually charge during both the deep idle period and active idle period; and
wherein optionally the deep idle period and the active idle period are due to transient workload fluctuations.

14. A non-transitory machine-readable medium comprising machine-readable instructions encoded thereon for performing the method according to any one of claims 7 to 13.

15. A computer program comprising instructions that when performed by one or more processors, causes the one or more processors to perform the method according to any one of claims 7 to 13.
